# EUROPEAN PATENT SPECIFICATION

(11) **EP 2 571 345 B1**
(45) Date of publication and mention of the grant of the patent: **31.12.2014**
(21) Application number: 11730417.0
(22) Date of filing: 19.05.2011
(51) Int. Cl.: A01D 69/08, A01F 12/40

(54) **COMBINES**
MÄHDRESCHER
MOISSONEUSES BATTEUSES

(30) Priority: 21.05.2010 GB 201008495
(43) Date of publication of application: 27.03.2013
(73) Proprietor: AGCO do Brasil Comércio e Indústria Ltda, 92420-000 Canoas (BR)
(72) Inventor: HOLLATZ, Brian, J., Porto Alegre CEP 90035.070 (BR)
(74) Representative: Marden, David Ian
(86) International application number: PCT/IB2011/001083
(87) International publication number: WO 2011/144993

(56) References cited:
- FR-A- 414 259
- GB-A- 404 567
- GB-A- 1 480 566
- GB-A- 1 566 976
- US-A1- 2004 009 834

## Description

This invention relates to combines and in particular to so-called "straw choppers" which are located at the rear of the combine and which chop up the straw which is exiting from the cleaning/separating sections of the combine.

Such straw choppers are well known and are conventionally powered by a belt and pulley drive system. For example, GB-1,566,976 discloses a belt and pulley driven straw chopper.

Ideally, when the straw chopper is not in use it is not rotating as this saves wear on the drive components and reduces the risk of injury to the combine operator.

Various approaches have been used in the past to disconnect the straw chopper from the belt and pulley drive system which have included, for example, friction clutches and the pulley drive which sometimes slip and thus generate significant heat. It is also known to engage pins mounted on a sliding collar through holes in the pulleys to lock the pulley to a drive shaft and to remove these pins to disengage the drive when the chopper is not in use. Although this pin system is simple and fairly reliable it does have some significant disadvantages namely that relatively close manufacturing tolerances are required on the holes and the drive pins and that these pins often seize in the holes due to them becoming worn, bent or rusty.

It is an object of the present invention to provide improved form of straw chopper drive which is both simple in construction, cheap to manufacture and easy for the combine operator to disconnect the drive to the chopper when the chopper is not in use.

Thus in accordance with the present invention there is provided a combine harvester having a straw chopper driven by a belt via a first drive pulley rotatable about a fixed shaft and a second output pulley also rotatable about the fixed shaft and which drives the chopper, a coupling sleeve slidably mounted on the first or second pulley, the sleeve being axially slidable between the two pulleys to a first position to connect the pulleys for co-rotation about the fixed shaft to drive the chopper and to a second position to disconnect the two pulleys to disconnect drive to the chopper.

Since the pulleys rotate relative to a fixed shaft, when the sleeve disconnects the pulleys there is no tendency of the output pulley to rotate, through its bearing on the fixed shaft, and thus the chopper remains stationary. This is a significant safety feature.

The coupling sleeve may slide relative to the said one pulley on internal teeth on the sleeve which engage external teeth on the pulley.

One end of the sleeve may be provided with axially projecting dog teeth which are engageable with corresponding axially projecting dog teeth on the other pulley to connect the pulleys for co-rotation.

This produces a particularly safe arrangement in which the danger of injury to the combine operator due to the chopper continuing to rotate is completely removed.

The sleeve may be moved axially directly by an operator hands between its positions. Alternatively, the sleeve maybe moved by a mechanical. hydraulic or electrical mechanism between its positions. Such a mechanism may be operatable from the cab of the combine.

When a mechanical, hydraulic or electrical mechanism is used to move the sleeve it may include a resilient energy storing link which stores any actuation force applied by the mechanism if the sleeve cannot initially engage the dog teeth due to the temporary misalignment of the teeth until the teeth are aligned whereupon the energy stored in the link is released to enable the sleeve to connect the pulleys.

A third pulley may be provided which rotates with the output pulley and with which the belt can alternatively be engaged to change the drive speed of the chopper.

The present invention will now be described, by way of example only, with reference to the accompanying drawings in which;

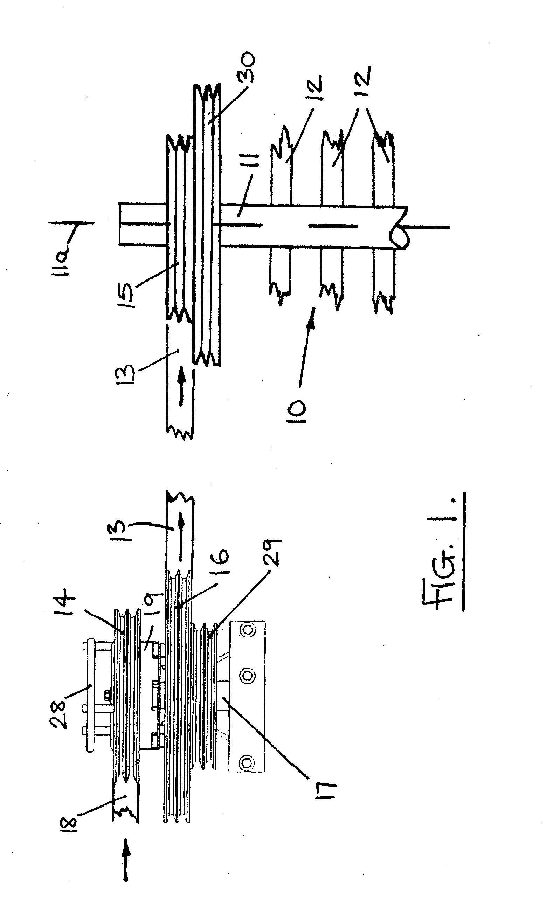

- Figure 1: shows diagrammatically a combine straw chopper drive arrangement in accordance with the present invention;
- Figures 2 and 3: show sections through a drive pulley arrangement used in Figure1 on a larger scale in its disengaged and engaged conditions respectively;
- Figures 4,5 and 6: show perspective views of the dog teeth and coupling sleeve arrangement used in the pulley arrangement of Figures 2 and 3;
- Figure 7: shows a diagrammatically details of the undercut dog teeth of Figures 4 to 6, and
- Figure 8: show an end view of part of pulley arrangements of Figure2 viewed in the direction of arrow A

Referring to the drawings, the straw chopper, part of which is shown diagrammatically at 10, has a main shaft 11 which is rotatable about an axis 11a and has straw chopping flails part of which are indicated diagrammatically at 12. The chopper 10 is driven by a belt 13 which engages a pulley 15 which is connected with chopper drive shaft 11.

Drive pulley 14 and second output pulley 16 are rotatable relative to a fixed shaft 17 on bearings 14a and 16a respectively. The output pulley 16 drives belt 13 and the drive pulley 14 is driven by an input belt 18.

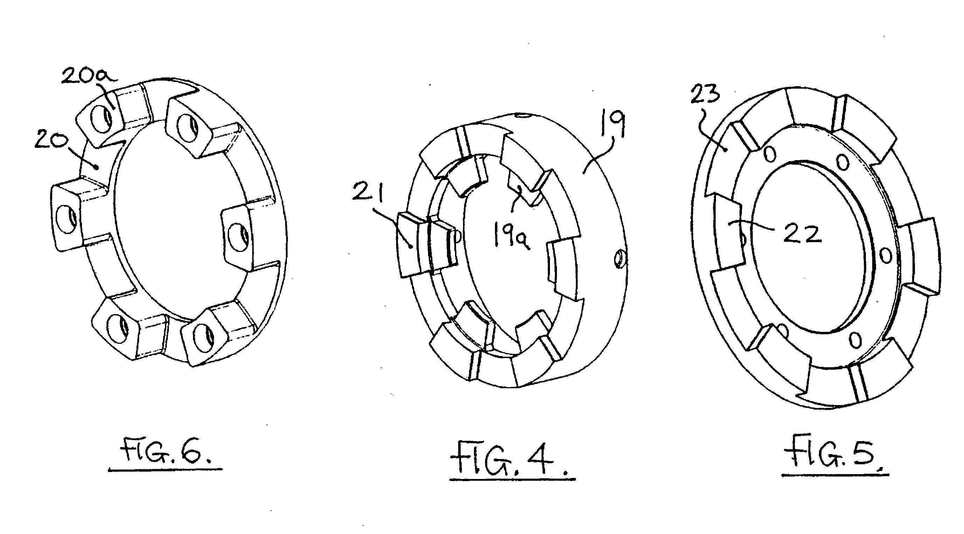

The drive pulley 14 carries an axially slideable sleeve 19 (see Figure 4) which has internal teeth 19a which slide on the teeth 20a of a ring 20 (see Figure 6) which is secured to the drive pulley 14 by bolts 20b. Sleeve 19 had at one end axially projecting dog teeth 21 which are engageablve with corresponding dog teeth 22 formed on a ring 23 (see Figure 5) which is secured to output pulley 16 by bolts 24.

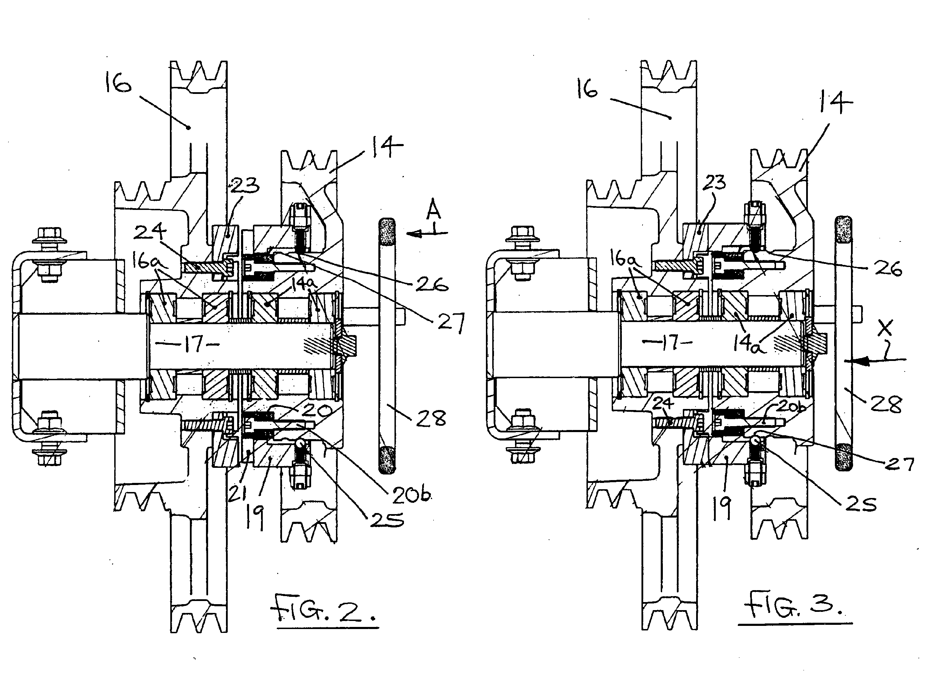

The sleeve 19 carries spring-loaded detent balls 25 which can hold sleeve 19 in a disengage position (shown in Figure 2) in which dog teeth 21 and 22 are disengaged and balls 25 engages recesses 26 in pulley 14. Detent balls 25 can also hold sleeve 19 in its engaged position in which dog teeth 21 and 22 are engaged (see Figures 3) and balls 25 engage recesses 27 in pulley 14.

As will be appreciated, when the axially slideable sleeve 19 is in the Figure 2 position, the pulleys 14 and 16 are disconnected and no drive is transmitted from the belt 18 via the pulleys 16,14 and the belt 13 to pulley 15 and hence the shaft 11 of the chopper 10 is not rotated.

To engage drive to the chopper the combine operator simply pushed on ring 28 which is connected with sleeve 19 (in the direction of arrow X in Figure 3) to move the sleeve 19 axially to the Figure 2 position when the pulley 14 is connected via dog teeth 21 and 22 to pulley 16 and hence drive to the chopper is connected. Drive to the chopper is disconnected by pulling on ring 28.

A third pulley 29 is permanently connected for rotation with pulley 14 and a further pulley 30 is connected with the chopper shaft 11. Thus a second chopper drive speed can be provided by positioning the belt 13 around pulleys 29 and 30 respectively.

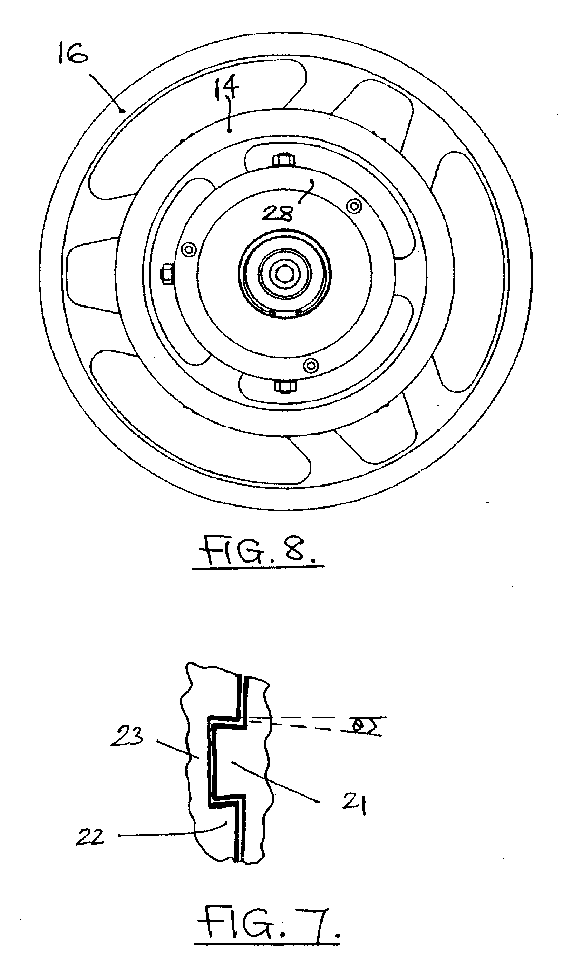

As shown diagrammatically in Figure 7 the dog teeth 21 and 22 are slightly undercut by an angle of θ degrees (typically 5°) to assist in retaining the teeth in engagement when drive is being transmitted to the chopper.

As will be appreciated, the present invention provides an arrangement which is particularly simple and relatively cheap to manufacture and which allow drive to the chopper to be easily disconnected when the chopper is no longer required to be in use.

In summary, there is provided a combine harvester comprises a straw chopper which is driven by a belt via a first drive pulley that is rotatable about a fixed shaft. An output pulley is also rotatable about the fixed shaft and drives the chopper. A coupling sleeve is slidably mounted on the drive pulley or output pulley, the sleeve being axially slideable between the two pulleys between two positions. In a first position the sleeve connects the pulleys for co-rotation about the fixed shaft to drive the chopper. In a second position the sleeve is positioned so that the two pulleys are disconnected so as to disconnect drive to the chopper.

## Claims

1. A combine harvester having a straw chopper (10) driven by a belt (18) via a first drive pulley (14) rotatable about a fixed shaft (17) and a second output pulley (16) which drives the chopper (10), **characterised in that** the second pulley (16) is also rotatable about the fixed shaft (17) and a coupling sleeve (19) is slidably mounted on the first or second pulley, the sleeve (19) being axially slideable between the two pulleys (14,16) to a first position to connect the pulleys for co-rotation about the fixed shaft (17) to drive the chopper and to a second position to disconnect the two pulleys (14,16) to disconnect drive to the chopper.

2. A combine according to claim 1 in which the coupling sleeve (19) slides relative to the said one pulley on internal teeth (19a) on the sleeve which engage external teeth (20a) on the pulley.

3. A combine according to claim 1 or 2 in which one end of the sleeve (19) is provided with axially projecting dog teeth (21) which are engageable with corresponding axially projecting dog teeth (22) on the other pulley (16) to connect the pulleys for co-rotation.

4. A combine according to claim 3 in which the dog teeth (21, 22) are undercut to help maintain the teeth in engagement when drive is being transmitted to the chopper.

5. A combine according to any one of claims 1 to 3 in which the sleeve (19) is moved axially, directly by an operator's hand between its positions.

6. A combine according to claim 4 in which the sleeve is provided with a pull ring (28) for gripping by the operator to move the sleeve.

7. A combine according to any one of claims 1 to 3 in which the sleeve is moved by a mechanical, hydraulic or electrical mechanism between its positions.

8. A combine according to any of claims 1 to 6 in which a spring-loaded detent (25) is provided for holding the sleeve in its first and second positions.

9. A combine according to any one of claims 1 to 7 in which a third pulley (29) is provide which co-rotates with the output pulley (16) and with which the belt can alternatively be engaged to change the drive speed of the chopper.

## Patentansprüche

1. Mähdrescher oder Erntemaschine mit einem Strohschneider oder Strohhäcksler (10), welcher von einem Gurt (18) über eine erste Antriebsscheibe (14), die um eine fixierte Welle (17) verdrehbar ist, und eine zweite Abtriebsscheibe (16), die den Strohhäcksler oder Strohschneider (10) antreibt, angetrieben ist, **dadurch gekennzeichnet, dass** die zweite Abtriebsscheibe (16) auch um die fixierte Welle (17) verdrehbar ist und eine Kopplungshülse (19) verschiebbar oder gleitend an der ersten Antriebsscheibe oder der zweiten Abtriebsscheibe montiert ist, wobei die Kopplungshülse (19) axial verschiebbar oder gleitend bewegt werden kann zwischen den beiden Scheiben (14, 16) in eine erste Position zum Verbinden der Scheiben für eine gemeinsame Rotation um die fixierte Welle (17), um den Strohhäckslers oder Strohschneiders anzutreiben, und in eine zweite Position zum Lösen der beiden Scheiben (14, 16) voneinander, um den Antrieb von dem Strohhäcksler oder Strohschneider zu lösen.

2. Mähdrescher oder Erntemaschine nach Anspruch 1, wobei die Kopplungshülse (19) relativ zu der Scheibe auf einem inneren Zahn (19a) der Kopplungshülse gleitet, welcher in Wechselwirkung tritt mit einem oder eingreift in einen äußeren Zahn (20a) an der Scheibe.

3. Mähdrescher oder Erntemaschine nach Anspruch 1 oder 2, wobei ein Ende der Kopplungshülse (19) mit einem axial hervorstehenden Greif-, Mitnehmer- oder Anschlagzahn (21) ausgestattet ist, welcher in Eingriff gebracht werden kann mit einem korrespondierenden, axial hervorstehenden Greif-, Mitnehmer- oder Anschlagzahn (22) an der anderen Scheibe (16) zur Verbindung der Scheiben für eine gemeinsame Rotation.

4. Mähdrescher oder Erntemaschine nach Anspruch 3, wobei die Greif-, Mitnehmer- oder Anschlagzähne (21, 22) hinterschnitten sind zur Unterstützung der Aufrechterhaltung des Eingriffs der Zähne, wenn die Antriebsbewegung oder das Antriebsmoment zu dem Strohhäcksler oder Strohschneider übertragen wird.

5. Mähdrescher oder Erntemaschine nach einem der Ansprüche 1 bis 3, wobei die Kopplungshülse (19) direkt durch eine Hand des Betreibers zwischen ihren Positionen axial bewegt wird.

6. Mähdrescher oder Erntemaschine nach Anspruch 4, wobei die Kopplungshülse mit einem Zugring (28) ausgestattet ist, der ein Greifen durch den Betreiber zur Bewegung der Kopplungshülse ermöglicht.

7. Mähdrescher oder Erntemaschine nach einem der Ansprüche 1 bis 3, wobei die Kopplungshülse durch einen mechanischen, hydraulischen oder elektrischen Mechanismus zwischen ihren Positionen bewegt wird.

8. Mähdrescher oder Erntemaschine nach einem der Ansprüche 1 bis 6, wobei zum Halten der Kopplungshülse in der ersten und zweiten Position eine Sperre, ein Anschlag oder eine Raste (25), der oder die federbeaufschlagt ist, vorhanden ist.

9. Mähdrescher oder Erntemaschine nach einem der Ansprüche 1 bis 7, wobei eine dritte Scheibe (29) vorhanden ist, welche gemeinsam mit der Abtriebsscheibe (16) rotiert und mit welcher der Gurt alternativ in Wechselwirkung treten kann zur Veränderung der Antriebsgeschwindigkeit des Strohhäckslers oder Strohschneiders.

## Revendications

1. Moissonneuse-batteuse comportant un hacheur de paille (10) entraîné par une courroie (18) par l'intermédiaire d'une première poulie d'entraînement (14) pouvant tourner autour d'un arbre fixe (17) et d'une seconde poulie de sortie (16) qui entraîne le hacheur (10), **caractérisée en ce que** la seconde poulie (16) peut aussi tourner autour de l'axe fixe (17) et un manchon de couplage (19) est monté de manière à pouvoir coulisser sur la première ou seconde poulie, le manchon (19) pouvant coulisser axialement entre les deux poulies (14, 16) vers une première position destinée à coupler les poulies de manière qu'elles tournent ensemble autour de l'arbre fixe (17) afin d'entraîner le hacheur et une seconde position destinée à découpler les deux poulies (14, 16) afin d'arrêter l'entraînement du hacheur.

2. Moissonneuse-batteuse selon la revendication 1, dans laquelle le manchon de couplage (19) coulisse par rapport à ladite première poulie sur des dents internes (19a) agencées sur le manchon qui sont couplées à des dents externes (20a) agencées sur la poulie.

3. Moissonneuse-batteuse selon la revendication 1 ou 2, dans laquelle une première extrémité du manchon (19) comporte des dents de crabotage (21) s'étendant axialement, qui peuvent être couplées à des dents de crabotage (22) s'étendant axialement correspondantes sur l'autre poulie (16) afin de coupler les poulies de manière qu'elles tournent simultanément.

4. Moissonneuse-batteuse selon la revendication 3, dans laquelle les dents de crabotage (21, 22) présentent une contre-dépouille afin de faciliter le maintien du couplage des dents lorsqu'un couple d'entraînement est transmis au hacheur.

5. Moissonneuse-batteuse selon l'une quelconque des revendications 1 à 3, dans laquelle le manchon (19) est déplacé axialement entre ses positions directement par la main d'un opérateur.

6. Moissonneuse-batteuse selon la revendication 4, dans laquelle le manchon comporte une bague d'entraînement (28) destinée à être saisie par l'opérateur afin de déplacer le manchon.

7. Moissonneuse-batteuse selon l'une quelconque des revendications 1 à 3 dans laquelle le manchon est déplacé entre ses positions par un mécanisme électrique, hydraulique ou mécanique.

8. Moissonneuse-batteuse selon l'une quelconque des revendications 1 à 6 dans laquelle un élément de positionnement chargé par ressort (25) est agencé de manière à retenir le manchon à ses première et seconde positions.

9. Moissonneuse-batteuse selon l'une quelconque des revendications 1 à 7 dans laquelle une troisième poulie (29) est agencée de manière à tourner simultanément avec la poulie de sortie (16) et avec laquelle la courroie peut, en variante, être couplée afin de modifier la vitesse d'entraînement du hacheur.
